(19)

Europäisches
Patentamt
European
Patent Office
Office européen
des brevets

(11)  **EP 3 978 131 A1**

(12)  **EUROPEAN PATENT APPLICATION**

(43) Date of publication:
**06.04.2022  Bulletin 2022/14**

(21) Application number: **21199933.9**

(22) Date of filing: **29.09.2021**

(51) International Patent Classification (IPC):
**B01L 3/00** *(2006.01)*      **B01L 7/00** *(2006.01)*
**G01N 33/49** *(2006.01)*      **G01N 15/00** *(2006.01)*

(52) Cooperative Patent Classification (CPC):
**B01L 7/525; B01L 3/502715; B01L 3/502792;**
**B01L 7/52; G01N 15/0266; G01N 15/1031;**
B01L 3/50273; B01L 2300/0645; B01L 2300/0887;
B01L 2400/0415; G01N 2015/1006;
G01N 2015/1087

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **30.09.2020  US 202063085368 P**
          **30.09.2020  US 202063085385 P**
          **14.01.2021  US 202163137597 P**
          **01.07.2021  CN 202110746169**

(72) Inventors:
 • **HUANG, HUNG-YUN**
  **236 New Taipei (TW)**
 • **HUANG, CHIH LUN**
  **236 New Taipei (TW)**
 • **HSIEH, JEN-CHIN**
  **236 New Taipei (TW)**
 • **LEE, CHUN-CHI**
  **236 New Taipei (TW)**
 • **WENG, YU-FU**
  **236 New Taipei (TW)**

(74) Representative: **Zaboliene, Reda**
  **Metida**
  **Business center Vertas**
  **Gyneju str. 16**
  **01109 Vilnius (LT)**

(71) Applicants:
 • **iCare Diagnostics International Co. Ltd.**
  **New Taipei 236 (TW)**
 • **Century Technology (Shenzhen) Corporation**
  **Limited**
  **Shenzhen, Guandong (CN)**

(54)  **METHOD OF MONITORING DROPLET MOVEMENT IN DIELECTRIC DEVICE APPLYING ELECTROWETTING**

(57)    An electrowetting on dielectric (EWOD) device able to self-detect a movement of a droplet under test includes a detection chip, a power switch module, a detection module, and a determination module. The detection chip includes a channel, several driving electrodes, and a detection electrode. Each driving electrode can couple with the detection electrode to form a driving loop. The power switch module provides one of a first voltage and a second voltage, to rock the droplet along, and a third voltage can also be applied to a specified driving electrode. The detection module computes a capacitance recovery time of the detection voltage changing from a peak voltage to a reference voltage in one cycle of a voltage period. The determination module confirms a position of the droplet based on the recovery time. A method for a self-detecting a movement of the droplet in EWOD device is also disclosed.

FIG. 1

**Description**

FIELD

The subject matter herein generally relates to nucleic acid testing, and particular to a method for monitoring droplets movement in an electrowetting on dielectric device.

BACKGROUND

A sample droplet of nucleic acid, for example, can be tested in an amplification reaction by an electrowetting on dielectric (EWOD) principle. An EWOD device controls the sample droplet to move along a specified path, driven by an electrode, thus a nucleic acid amplification step can be completed. The position of the droplet needs to be monitored for ensuring movement of the droplet along the specified path. In an abnormal state, such as a volume of the droplet being too big or too small, or the droplet carrying an abnormal electrical charge, or the environment including impurities or excess static electricity, or a change in temperature or humidity, the droplet may fail to move along the specified path, but the failure in movement may not be detected. The failure of the nucleic acid amplification step reduces the reliability of the EWOD device.

There is room for improvement in the art.

BRIEF DESCRIPTION OF THE FIGURES

Implementations of the present disclosure will now be described, by way of example only, with reference to the attached figures.

FIG. 1 is a diagram illustrating a detection chip in one embodiment according to the present disclosure.

FIG. 2 is a diagram illustrating an electrowetting on dielectric (EWOD) device in one embodiment according to the present disclosure.

FIG. 3 is a circuit diagram illustrating the EWOD device of FIG. 2 in one embodiment according to the present disclosure.

FIG. 4 is a circuit diagram illustrating the EWOD device of FIG. 3 in one embodiment according to the present disclosure.

FIG. 5 illustrates voltage waveforms of the EWOD device of FIG. 4 in one embodiment according to the present disclosure.

FIG. 6 illustrates voltage waveforms of the power switch module of FIG. 4 under a first timing sequence, a second timing sequence, and a third timing sequence, in one embodiment according to the present disclosure.

FIG. 7 is a diagram illustrating a movement and a detection of droplet in a first embodiment according to the present disclosure.

FIG. 8 is a diagram illustrating a movement and a detection of droplet in a second embodiment according to the present disclosure.

FIG. 9 illustrates voltage waveforms of the power switch module of FIG. 4 under a first timing sequence, a second timing sequence, and a third timing sequence in one embodiment according to the present disclosure.

FIG. 10 is a diagram illustrating a movement and a detection of droplet in a third embodiment according to the present disclosure.

FIGS. 11, 12, and 13 are diagrams illustrating droplets with different volumes, according to the present disclosure.

DETAILED DESCRIPTION

The present disclosure is described with reference to accompanying drawings and the embodiments. It will be understood that the specific embodiments described herein are merely some embodiments, not all the embodiments.

It is understood that, the term "coupled" is defined as connected, whether directly or indirectly through intervening components, and is not necessarily limited to physical connections. The connection can be such that the objects are permanently connected or releasably connected. The terms "perpendicular", "horizontal", "left", "right" are merely used for describing, but not being limited.

Unless otherwise expressly stated, all technical and scientific terminology of the present disclosure are the same as understood by persons skilled in the art. The terminology used in the description of the various described embodiments herein is for the purpose of describing particular embodiments only and is not intended to be limiting. The term "comprising" means "including, but not necessarily limited to"; it specifically indicates open-ended inclusion or membership in a so-described combination, group, series, and the like.

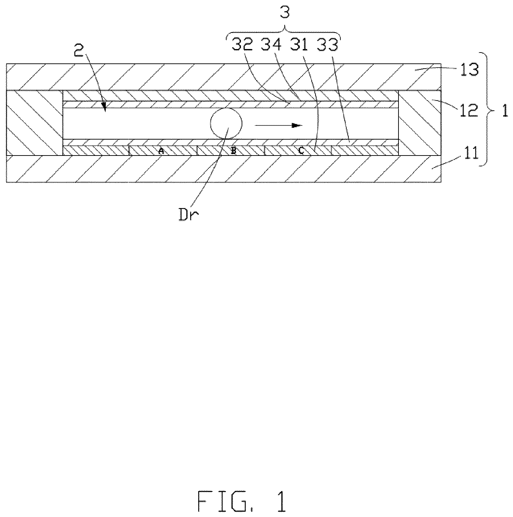

FIG. 1 illustrates one embodiment of a detection chip 10. The detection ship 10 includes a chip casing 1, a channel 2, and a driving loop 3. The channel 2 is disposed in the chip casing 1 and receives a droplet Dr of nucleic acid or other sample for testing. The droplet Dr will undergo a nucleic acid amplification reaction in the channel 2. The chip casing 1 includes a first cover 11, a spacer layer 12, and a second cover 13. Two opposite surfaces of the spacer layer 12 are respectively adjacent to the first cover 11 and the second cover 13. The first cover 11, the spacer layer 12, and the second cover 13 cooperatively form the channel 2. The driving loop 3 drives the droplet Dr to move along a specified path for executing the nucleic acid amplification reaction.

The driving loop 3 includes some driving electrodes 31 disposed on a side surface of the first cover 11 adjacent to the channel 2, a first dielectric layer 33 disposed on a side of the driving electrodes 31 adjacent to the second cover 13, a detection electrode 32 disposed on a side surface of the second cover 13 adjacent to the channel 2, and a second dielectric layer 34 disposed on a side of the detection electrode 32 adjacent to the first cover 11. The driving electrodes 31 and the detection electrode 32 are disposed on opposite sides of the channel 2. By powering on and powering off the driving electrode 31 and the detection electrode 32, the droplet Dr in the channel 2 is moved along the specified path.

In one embodiment, as shown in FIG. 1, the driving electrodes 31 in the driving loop 3 are arranged in a matrix. A conductive layer disposed on a side surface of the second cover 13 adjacent to the channel 2 serves as the detection electrode 32.

In one embodiment, the driving electrodes 31 are disposed on a side of the first cover 11 adjacent to the channel 2. The driving electrodes 31 can be formed by a metal etching manner or by electroplating.

In detail, the driving loop 3 is a thin film transistor (TFT) driving loop. Based on a conductivity of the droplet Dr and the electrowetting on dielectric (EWOD) principle, the droplet Dr is moved along the specified path in the channel 2. The TFTs enable a circuit between one of the driving electrodes 31 and the detection electrode 32 to be turned on or turned off, a voltage between the driving electrode 31 and the detection electrode 32 can be adjusted. A wetting property between the first dielectric layer 33 and the second dielectric layer 34 can be adjusted for controlling the droplet Dr to move along the specified path. In one embodiment, there are three driving electrodes 31, such as electrodes A-C, and the principle of the droplet Dr moving along the specified path is as below.

As shown in FIG. 1, the droplet Dr can be placed on the electrodes A-C. When the droplet Dr is disposed on the electrode A, a voltage is applied on the electrode B and the detection electrode 32, and a voltage applied to the electrode A and the detection electrode 32 is turned off. The wetting property between the first dielectric layer 33 and the second dielectric layer 34 is changed, which causes a liquid-solid contact angle between the electrode A and the droplet Dr to increase, and a liquid-solid contact angle between the electrode B and the droplet Dr to decrease, thus the droplet Dr moves from the electrode A to the electrode B.

Obviously, a liquid driving principle of the detection chip 10 changes the voltage for adjusting hydrophobic characteristics of the first and second dielectric layers 33/34. An adsorption capacity of the first and second dielectric layers 33/34 for adsorbing the droplet Dr is changed, which makes the droplet Dr move. Thus, when assembled and before use, the location of the droplet Dr needs to be established, then the droplet Dr can be moved along the specified path. The size of the droplet Dr also needs to be known.

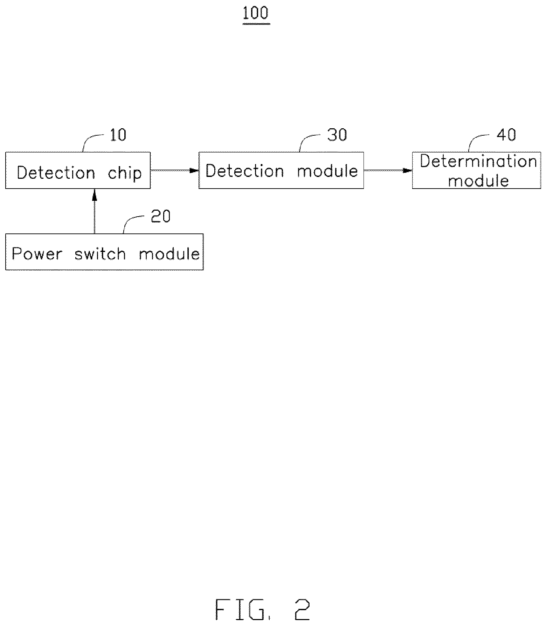

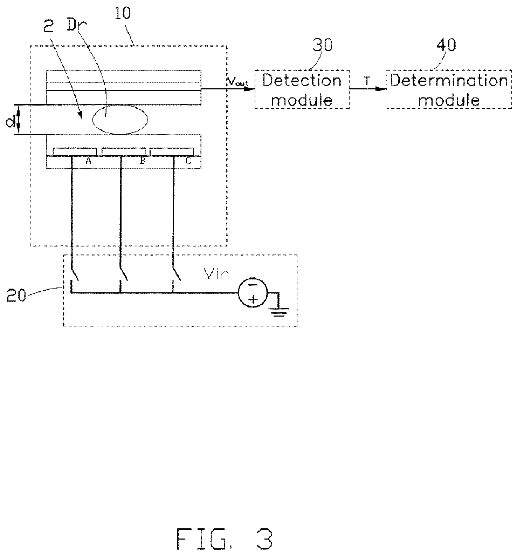

FIGS. 2 and 3 respectively show an embodiment of a diagram and a circuit diagram of a dielectric wetting device 100. The dielectric wetting device 100 includes the detection chip 10, a power switch module 20, a detection module 30, and a determination module 40. The power switch module 20 is electrically connected to the driving electrodes 31. The power switch module 20 applies a power voltage $V_{in}$ to the driving electrodes 31. The power voltage $V_{in}$ includes a first voltage $V_1$, a second voltage $V_2$, and a third voltage $V_3$. The first voltage $V_1$ and the second voltage $V_2$ cooperatively drive the droplet Dr to move, and the third voltage $V_3$ causes a coupling capacitor between the driving electrode 31 and the detection electrode 32, thus the detection electrode 32 can output a detection voltage $V_{out}$ (coupled voltage).

The detection module 30 is electrically connected to the detection electrode 32. The detection module 30 receives the detection voltage $V_{out}$ outputted by the detection electrode 32, and computes a recovery time T of the detection voltage $V_{out}$ changing from a peak voltage $V_p$ to a reference voltage $V_r$, in one cycle of a voltage period.

The determination module 40 is electrically connected to the detection module 30. The determination module 40 receives the recovery time T, and locates the position of the droplet Dr based on the recovery time T. The determination module 40 can also confirm a volume of the droplet Dr (see later).

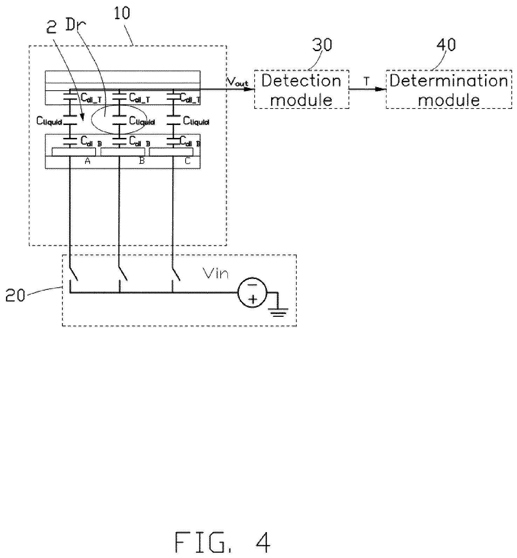

FIG. 4 is a circuit diagram of the EWOD device 100 in one embodiment. In addition to the power switch module 20, the detection module 30, and the determination module 40, equivalent capacitors are formed in the driving loop 3 between the first dielectric layer 33, the second dielectric layer 34, and the air in the channel 2 of the detection chip 10. The first dielectric layer 33 forms a first dielectric capacitor $C_{di-B}$ in the driving loop 3. The second dielectric layer 34 forms a second dielectric capacitor $C_{di-T}$. The channel 2 between the first dielectric layer 33 and the second dielectric layer 34 without any silicone oil forms an equivalent air capacitor $C_{air}$. The capacitance of the equivalent air capacitor $C_{air}$ is changed according to a quantity of silicone oil in the channel 2 between the first dielectric layer 33 and the second dielectric layer 34. In each driving loop 3 formed by each driving electrode 31, the first dielectric capacitor $C_{di-B}$, the air capacitor $C_{air}$, and the second dielectric capacitor $C_{di-T}$ are electrically connected in series. A terminal of the first dielectric capacitor $C_{di-B}$ away from the air capacitor $C_{air}$ is electrically connected to the corresponding driving electrode 31, and a terminal of the second dielectric capacitor $C_{di-T}$ away from the air capacitor $C_{air}$ is

electrically connected to the detection electrode 32.

In one embodiment, the first voltage $V_1$ is a positive voltage, and the second voltage $V_2$ is a negative voltage. The driving electrode 31 with the droplet Dr receives the negative voltage, and a next driving electrode 31 receives the positive voltage, the droplet Dr is driven along the specified path according to the EWOD principle. The third voltage $V_3$ is a continuous square pulsed voltage. By applying the continuous square pulsed voltage on one of the driving electrodes 31, the droplet Dr being disposed on the driving electrode 31 which is receiving the continuous square pulsed voltage is confirmed, and a position and a volume of the droplet Dr also can be confirmed.

In one embodiment, a controller (not shown) controls the power switch module 20 to turn on one of the driving electrodes 31 and the driving electrodes 31 for sequential detection, thus a position and a volume of the droplet Dr can be accurately confirmed.

When the detection electrode 32 outputs the detection voltage $V_{out}$ to the detection module 30, the detection module 30 forms a voltage line cured in time, and computes the recovery time T of the detection voltage $V_{out}$ changing from the peak voltage $V_p$ to the reference voltage $V_r$ in one cycle of the voltage period. The detection module 30 outputs the recovery time T to the determination module 40. The determination module 40 locates the position of the droplet Dr based on the recovery time T, and also confirms the volume of the droplet Dr.

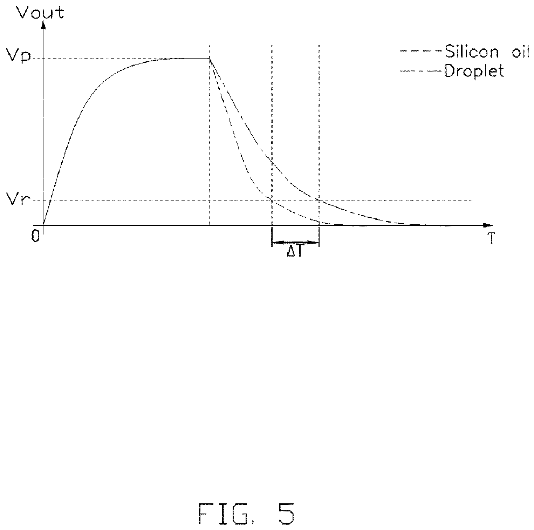

FIGS. 2-5 illustrate the detection principle of the droplet in the EWOD device 100.

Based on a self-capacitance technology, the capacitance differences of the driving electrodes 31 in the driving loop 3 are detected, thus the position and the volume of the droplet Dr are confirmed.

Formulas for computing the capacitance are shown as below.

$$C_{liquid} = (D_{liquid} \times S)/d \qquad \text{Formula 1}$$

$$C_{liquid-1} = (D_{liquid1} \times S)/d \qquad \text{Formula 2}$$

$$C_{liquid-2} = (D_{liquid2} \times S)/d \qquad \text{Formula 3}$$

$$C = C_{di-B} + C_{di-T} + C_{liquid-1}/C_{liquid-2} \qquad \text{Formula 4}$$

$C_{liquid}$ represents a capacitance of a liquid in the channel 2, $D_{liquid}$ represents a dielectric coefficient of the liquid in the channel 2, S represents an area of a single driving electrode 31, d represents a thickness of the liquid in the channel 2, which is usually considered as a height of the channel 2. $D_{liquid1}$ represents the dielectric coefficient of silicon oil, which is around 2.8. $D_{liquid2}$ represents the dielectric coefficient of the nucleic acid droplet Dr which is around 85. C represents a sum of capacitances of different driving electrodes 31.

A difference between the sum of capacitances of the driving electrodes 31 is used for confirming whether there is or is not the droplet Dr on the driving electrodes 31. For example, there is silicon oil on the electrode A, and the droplet Dr is disposed on the electrode B, the sum of capacitances $C_A$ of the corresponding driving loop 3 with the electrode A sums the capacitances of the first dielectric capacitor $C_{di-B}$, the second dielectric capacitor $C_{di-T}$, and the 2.8, which is the dielectric coefficient of silicon oil. The sum of capacitance $C_A$ of the corresponding driving loop 3 with the electrode B sums the capacitances of the first dielectric capacitor $C_{di-B}$, the second dielectric capacitor $C_{di-T}$, and the 85, which is the dielectric coefficient of the droplet Dr. There is a considerable difference between the sum of capacitance $C_A$ of the corresponding driving loop 3 with the electrode A and the sum of capacitance $C_B$ of the corresponding driving loop 3 with the electrode B, and by comparing the sum of capacitance $C_A$ of the corresponding driving loop 3 with the electrode A and the sum of capacitance $C_B$ of the corresponding driving loop 3 with the electrode B, the position of the droplet Dr is established and confirmed. The difference between the sum of capacitance $C_A$ and the sum of capacitance $C_B$ is determined by the recovery time T of the detection voltage $V_{out}$ changing from the peak voltage $V_p$ to the reference voltage $V_r$ in one cycle of the voltage period. The dielectric coefficient of the droplet Dr is larger than the dielectric coefficient of silicon oil, and the sum of capacitance of the corresponding driving loop 3 with the droplet Dr on the driving electrode 31 is larger than the sum of capacitance of the corresponding driving loop 3 with the silicon oil on the driving electrode 31. The recovery time T of the detection voltage $V_{out}$ changing from the peak voltage $V_p$ to the reference voltage $V_r$ in one cycle of the voltage period is longer. There is a time difference between the recovery time T of the driving loop 3 with the droplet Dr on the driving electrode 31 and the recovery time T of the driving loop 3 with silicon oil on the driving electrode 31. Therefore, the recovery time T can be used for determining a position of the droplet Dr. Based on the sum of capacitances, the actual number of the driving electrodes 31 covered by the droplet Dr can be confirmed. By combining the number of the driving electrodes 31 covered by the droplet Dr, the area S of the single driving electrode 31, and the height of the channel 2, a volume of the droplet Dr can be easily computed.

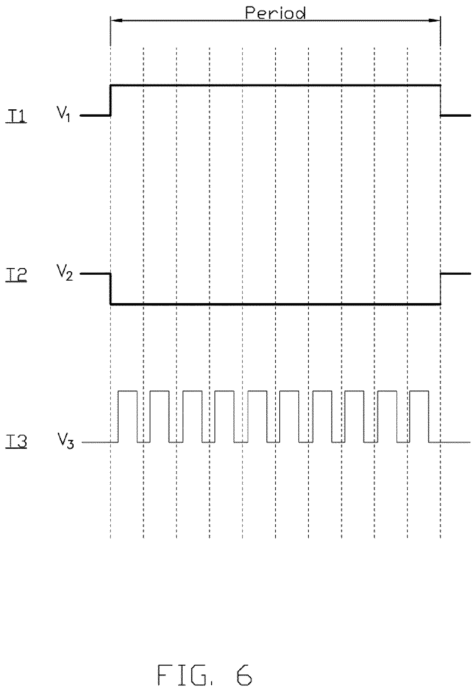

As shown in FIGS 3, 4, and 6, the processes of driving the droplet Dr and of detecting the droplet Dr in the EWOD device 100 in a time-sharing manner is as below.

The driving electrodes 31 are divided into three separate types. The three types of the driving electrodes 31 are in a first timing sequence T1, a second timing sequence T2, and a third timing sequence T3, which are fixed timing sequences. In the first timing sequence T1, the power switch module 20 provides the positive voltage (the first voltage $V_1$) to the driving electrodes 31. In the second timing sequence T2, the power switch module 20 provides the negative voltage (the second voltage $V_2$) to the driving electrodes 31. hi the third timing sequence T3, the power switch module 20 provides the continuous square pulsed voltage (the third voltage $V_3$) to the driving electrodes 31. During movement of the droplet Dr, the driving electrodes 31 are under different timing sequences. When the driving electrode 31 supporting the droplet Dr is in the second timing sequence T2, the two driving electrodes 31 adjacent to the droplet Dr are respectively under the first timing sequence T1 and the second timing sequence T3. For example, the driving electrodes 31 include six electrodes A-F, and the movement of the droplet Dr in the channel 2 is as below.

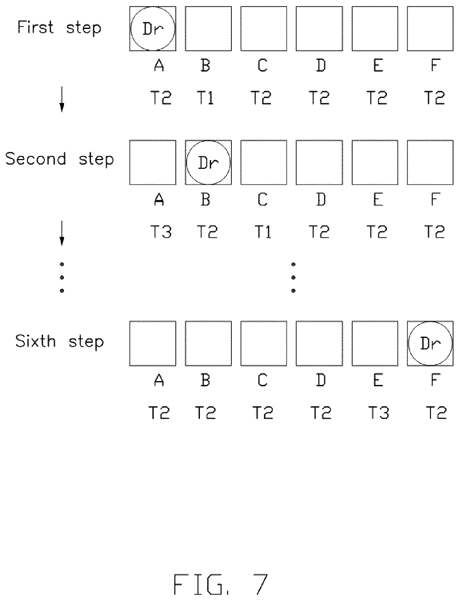

As shown in FIGS. 4, 6, and 7, in one embodiment, the driving electrodes 31 are ungrouped, and are separately driven. At first, the droplet Dr is disposed on the electrode A, the electrodes B-F are under the second timing sequence. When the electrode B is under the first timing sequence, the power switch module 20 provides the positive voltage to the electrode B, and provides negative voltage to the other electrodes, such as the electrode A and the electrodes C-F. Thus, the droplet Dr moves from the electrode A to the electrode B. Further, when the power switch module 20 provides the positive voltage to the electrode C, and provides the negative voltage to the other electrodes, such as the electrodes A-B and the electrodes D-F, the droplet Dr moves from the electrode B to the electrode C. Then, the power switch module 20 provides the continuous square pulsed voltage to the electrode A. Based on the droplet detection principle, the droplet Dr being on the electrode A is confirmed by the recovery time T, thus whether there is movement of the droplet Dr from the electrode A to the electrode B is confirmed. By repeating the above steps, the progress of the droplet Dr along the specified path is confirmed, and the nucleic acid amplification step can be completed.

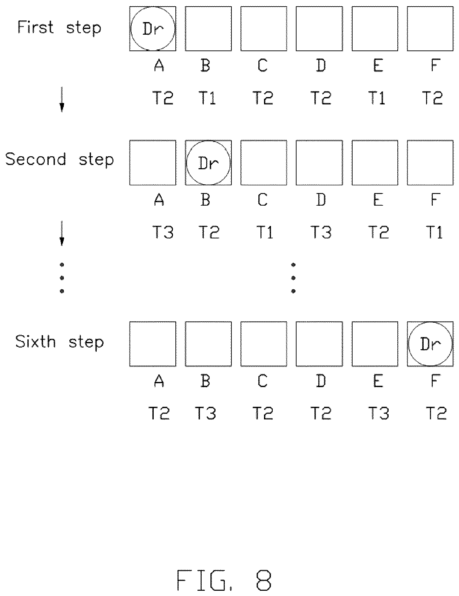

As shown in FIGS. 4, 6, and 8, the driving electrodes 31 are grouped. In each group, there are three electrodes. For example, in each group, there are electrodes A-C. At first, the droplet Dr is disposed on the electrode A in a first group, the electrodes A and C are under the second timing sequence T2, and the electrode B is under the first timing sequence T1. The droplet Dr moves from the electrode A to electrode B. Further, the power switch module 20 provides the positive voltage to the electrode C, and provides the negative voltage to the electrode B, thus the droplet Dr moves from the electrode B to the electrode C. Then, the power switch module 20 provides the continuous square pulsed voltage to the electrode A. Based on the droplet detection principle, the droplet Dr being on the electrode A is confirmed by the recovery time T, thus whether movement of the droplet Dr from the electrode A to the electrode B is confirmed. When the droplet Dr moves to a next group of the driving electrodes 31, the electrodes A in different groups are powered or being powered off at the same time, the electrodes B in different groups are being powered or being powered off at the same time, and the electrodes C in different groups are being powered or being powered off at the same time. The pinouts of a control terminal can be reduced, and a cost of the EWOD device 100 is decreased.

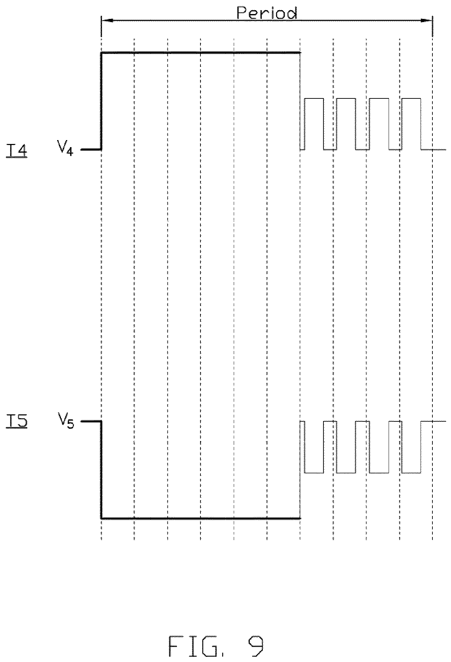

As shown in FIGS. 4, 9, and 10, processes for driving the droplet Dr and of detecting the droplet Dr in the EWOD device 100 at the same time is as below.

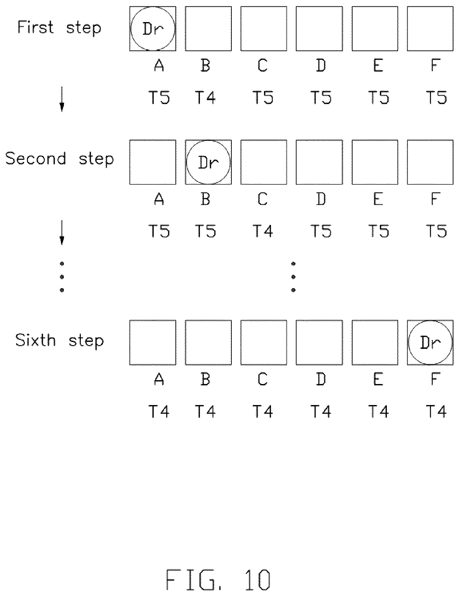

The driving electrodes 31 are divided into two groups, which are respectively under a fourth timing sequence T4 and a fifth timing sequence T5. Under the fourth timing sequence T4, the power switch module 20 provides the positive voltage (the first voltage $V_1$) and the continuous square pulsed voltage (the third voltage $V_3$) to the driving electrodes 31. Under the fifth timing sequence T5, the power switch module 20 provides the negative voltage (the second voltage $V_2$) and the continuous square pulsed voltage (the third voltage $V_3$) to the driving electrodes 31. For example, as shown in FIG. 10, the driving electrodes 31 include six electrodes A-F. At first, the droplet Dr is disposed on the electrode A, and the electrodes A and C-F are under the fifth timing sequence T5, and the electrode B is under the fourth timing sequence T4. The power switch module 20 provides the positive voltage and the continuous square pulsed voltage to the electrode B, and provides the negative voltage (the first voltage $V_2$) and the continuous square pulsed voltage to the electrodes A and C-F. The droplet Dr moves from the electrode A to the electrode B. Whether or not the droplet Dr is on the electrode A is confirmed by the recovery time T, thus movement of the droplet Dr from the electrode A to the electrode B is confirmed. By repeating the above steps, the droplet Dr moving along the specified path is confirmed, and the nucleic acid amplification step can be completed. The movement and the detection of the droplet Dr are operated at the same time, thus a detection efficiency and a detection accuracy of the EWOD device 100 are improved.

As shown in FIGS. 4, and 11-13, a principle for detecting the volume of the droplet Dr in the EWOD device 100 is as below.

Each driving electrode 31 receives a continuous square pulsed voltage (the third voltage $V_3$), the number of the driving electrodes 31 covered by the droplet Dr is confirmed by the recovery time T. The volume of the droplet Dr is computed according to the area S of the single driving electrode 31 and the height d of the channel 2. For example, the driving electrodes 31 include electrodes A-F. Each electrode has a common size of contact area.

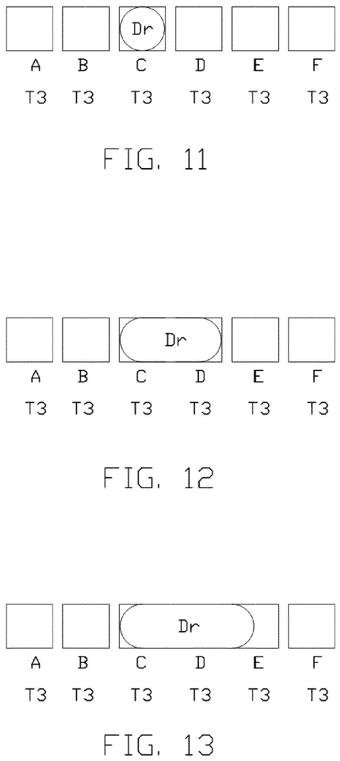

In a first embodiment, as shown in FIG. 11, when the droplet Dr is merely disposed on the electrode C, the other electrodes of A-C and E-F are exposed and uncovered in the channel 2. The volume V of the droplet Dr is the area S multiplied by the height d of the channel 2. In a second embodiment, as shown in FIG. 12, when the droplet Dr covers the electrodes C and D, and the other electrodes A-B and E-F are uncovered in the channel 2, the volume V of the droplet Dr is the area S multiplied by 2 and multiplied by the height d of the channel 2.

In a third embodiment, as shown in FIG. 13, when detecting the position of the droplet Dr, the change of the sum of capacitance of the corresponding driving electrode 31 can be used for computing an area of the driving electrodes 31 covered by the droplet Dr. For example, when the droplet Dr covers the electrodes C-E, a change of the sum of capacitances is one half of the sum of capacitance of the whole droplet Dr. The recovery time T of the detection voltage $V_{out}$ changing from the peak voltage $V_p$ in the driving loop 3 with the electrode E is a half of the recovery time T of the detection voltage $V_{out}$ changing from the peak voltage $V_p$ in the driving loop 3 with the electrode C or the electrode Dr. The volume of the droplet Dr is the area S multiplied by 2.5 and multiplied by the height d of the channel 2.

It is understood that, the movement and the detection of the droplet Dr are detected at the same time, and the volume of the droplet Dr is also computed at the same time, thus an efficiency of the detection is improved.

In the present disclosure, the EWOD device 100 executes a self-detection of the detection chip 10 by the internal circuit of the EWOD device 100, and no external detection device is required. The method for detecting the movement and the position of the droplet Dr in the EWOD device 100 is simple, and easily operated. The result of detection is more accurate. The method has higher efficiency, and determination of position and volume of the droplet Dr is more accurate.

A method for detecting a movement and a position of the droplet Dr in the EWOD device 100 is also provided. The movement detection and the position detection can be executed at the same time or in a time-sharing manner. The method includes at least the following steps, which also may be followed in a different order:

In a step of driving the droplet Dr includes:

The power switch module 20 provides a first voltage $V_1$ and the second voltage $V_2$ to each driving electrode 31, the droplet Dr is driven by the first voltage $V_1$ and the second voltage $V_2$ to move along a specified path.

The first voltage $V_1$ is a positive voltage, the second voltage $V_2$ is a negative voltage. The power switch module 20 provides the negative voltage to the driving electrode 31 covered by the droplet Dr, and provides the positive voltage to the next driving electrode 31 in the specified path where the droplet Dr is going to cover, the other driving electrodes 31 are applied with the negative voltage, thus the droplet Dr moves from the current driving electrode 31 to the next driving electrode 31.

In a step of detecting the droplet Dr includes:

In a first step, the power switch module 20 provides the third voltage $V_3$ to the specified driving electrode 31. The specified driving electrode 31 couples with the detection electrode 32, thus the detection electrode 32 outputs a detection voltage $V_{out}$ (coupled voltage).

In a second step, the detection module 30 receives the detection voltage $V_{out}$ outputted by the detection electrode 32, and computes a recovery time T of the detection voltage $V_{out}$ changing from a peak voltage $V_p$ to a reference voltage $V_r$ in one cycle of a voltage period.

In a third step, the determination module 40 receives the recovery time T, and locates the position of the droplet Dr based on the recovery time T. The determination module 40 can also confirms a volume of the droplet Dr.

The EWOD device 100 can execute a self-detection for detecting the internal circuits. Based on a self-capacitance technology, the droplet Dr in the channel 2 is detected. In detail, by using the recovery time T of the in the driving loop 3, whether the movement of the droplet Dr in the EWOD device 100 is along the specified path is confirmed, and the position and the volume of the droplet Dr in the EWOD device 100 are also confirmed. The method for detecting the circuit in the EWOD device 100 is simple, and easily for operated. The result of detection is more accurate. The method has higher efficiency, in the position and the volume of the droplet Dr is more accurate.

Besides, many variations and modifications can be made to the above-described embodiment(s) of the disclosure without departing substantially from the spirit and principles of the disclosure. All such modifications and variations are intended to be included herein within the scope of this disclosure and protected by the following claims. The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best use the invention and various described embodiments with various modifications as are suited to the particular use contemplated.

**Claims**

1. An electrowetting on dielectric (EWOD) device (100) comprising:

> a detection chip (10) comprising a channel (2) configured for receiving a droplet (Dr) and a driving loop (3) disposed on opposite sides of the channel (2); the driving loop (3) comprising several driving electrodes (31) and a detection electrode (32); the driving electrodes (31) being on a side of the channel (2), and the detection electrode (32) being on a side of the channel (2) opposite to the driving electrodes (31); each driving electrode (31) being configured to couple with the detection electrode (32) to form the driving loop (3);

a power switch module (20) electrically connected to the driving electrodes (31), and configured to output a first voltage ($V_1$), a second voltage ($V_2$), and a third voltage ($V_3$) to at least one of the driving electrodes (31); the first voltage ($V_1$) and the second voltage ($V_2$) drives the droplet (Dr) to move, the third voltage ($V_3$) cause one of the driving electrode (31) to be coupled with the detection electrode (32) to output a detection voltage ($V_{out}$);

a detection module (30) electrically connected to the detection electrode (31), and configured to receive the detection voltage ($V_{out}$), and compute a recovery time of the detection voltage ($V_{out}$) changing from a peak voltage to a reference voltage in one cycle of a voltage period; and

a determination module (40) electrically connected to the detection module (30), and configured to receive the recovery time and confirm a position of the droplet (Dr).

2. The EWOD device (100) of claim 1, wherein the determination module (40) further computes a volume of the droplet (Dr).

3. The EWOD device (100) of claim 2, wherein a sum capacitance of an equivalent capacitor of each driving electrode in the corresponding driving loop (3) is computed; a number of the driving electrodes covered by the droplet is confirmed by the sum capacitance, and the determination module is adapted to compute the volume of the droplet by combining the number of the driving electrodes covered by the droplet, with an area of the single driving electrode, and with a height of the channel.

4. The EWOD device (100) of claim 1, wherein the first voltage ($V_1$) is a positive voltage, the second voltage ($V_2$) is a negative voltage, and the third voltage ($V_3$) is a continuous square pulsed voltage.

5. The EWOD device (100) of claim 4, wherein each driving electrode (31) is under one of a first timing sequence, a second timing sequence, and a third timing sequence; the power switch module (20) provides the first voltage ($V_1$) to the driving electrodes (31) under the first timing sequence, provides the second voltage ($V_2$) to the driving electrodes (31) under the second timing sequence, and provides the third voltage ($V_3$) to the driving electrodes (31) under the third timing sequence.

6. The EWOD device (100) of claim 4, wherein each driving electrode (31) is under a fifth timing sequence or a fifth timing sequence; the power switch module (20) provides the first voltage ($V_1$) and the third voltage ($V_2$) to the driving electrodes (31) under the fourth timing sequence; the power switch module (20) further provides the second voltage ($V_2$) and the third voltage ($V_3$) to the driving electrodes (31) under the fifth timing sequence.

7. The EWOD device (100) of claim 1, wherein the driving loop (3) further comprises a first dielectric layer (33) disposed on a side of the driving electrodes (31) adjacent to the detection electrode (32), and a second dielectric layer (34) disposed on a side of the detection electrode (32) adjacent to the driving electrodes (31).

8. The EWOD device (100) of claim 1, wherein the detection chip (10) comprises a chip casing (1); the chip casing (1) comprises a first cover (11), a spacer layer (12), and a second cover (13); two opposite surfaces of the spacer layer (12) are respectively adjacent to the first cover (11) and the second cover (13); the first cover (11), the spacer layer (12), and the second cover (13) form the channel (2); the driving electrodes (31) arranged in a matrix are disposed on a surface of the first cover (11) adjacent to the channel (2); the detection electrode (32) is disposed on a surface of the second cover (13) adjacent to the channel (2).

9. A method of detecting a droplet (Dr) in an electrowetting on dielectric (EWOD) device (100); the method comprising:

a step of driving the droplet (Dr) comprising:

providing a first voltage ($V_1$) and the second voltage ($V_2$) to each driving electrode (31) for driving the droplet (Dr) to move along a specified path; and

a step of detecting the droplet (Dr) comprising:

providing a third voltage ($V_3$) to a specified driving electrode (31), for making the specified driving electrode (31) to be coupled with a detection electrode (32), and outputting a detection voltage ($V_{out}$) by the detection electrode (32); computing a recovery time of the detection voltage ($V_{out}$) changing from a peak voltage to a reference voltage in one cycle of a voltage period; and locating a position of the droplet (Dr) based on the recovery time.

10. The method of claim 9, further comprising:

computing a volume of the droplet (Dr) while locating the position of the droplet (Dr).

11. The method of claim 10, wherein a sum capacitance of an equivalent capacitor of each driving electrode (31) in the corresponding driving loop (3) is computed; a number of the driving electrodes (31) covered by the droplet (Dr) is confirmed by the sum capacitance, and by combining with the number of the driving electrodes (31) covered by the droplet (Dr), an area of the single driving electrode (31), and a height of the channel (2), a volume of the droplet (Dr) can be computed.

12. The method of claim 9, wherein the first voltage ($V_1$) is a positive voltage, the second voltage ($V_2$) is a negative voltage, and the third voltage ($V_3$) is a continuous square pulsed voltage.

13. The method of claim 12, wherein each driving electrode (31) is under one of a first timing sequence, a second timing sequence, and a third timing sequence; the step of driving the droplet (Dr) and the step of detecting the droplet (Dr) are executed in a time-sharing manner;

    the step of driving the droplet (Dr) comprising: providing the first voltage ($V_1$) to the driving electrode (31) under the first timing sequence, providing the second voltage ($V_2$) to the driving electrode (31) under the second timing sequence for driving the droplet (Dr) to move from the driving electrode (31) under the second timing sequence to the driving electrode (31) under the first timing sequence;
    the step of detecting the droplet (Dr) comprising:

    providing the third voltage ($V_3$) to the driving electrode (31) under the third timing sequence for making the driving electrode (31) under the third timing sequence to be coupled with the detection electrode (32), and outputting the detection voltage ($V_{out}$) by the detection electrode (32);
    computing the recovery time of the detection voltage ($V_{out}$) changing from the peak voltage to the reference voltage in one cycle of the voltage period; and
    determining whether the movement of the droplet (Dr) is successful based on the recovery time.

14. The method of claim 12, wherein each driving electrode (31) is under a fifth timing sequence or a fifth timing sequence; the step of driving the droplet (Dr) and the step of detecting the droplet (Dr) are executed at the same time;

the step of driving the droplet (Dr) comprising: providing the first voltage ($V_1$) and the third voltage ($V_3$) to the driving electrode (31) under the fourth timing sequence, providing the second voltage ($V_2$) and the third voltage ($V_3$) to the driving electrode (31) under the fifth timing sequence for driving the droplet (Dr) to move from the driving electrode (31) under the fifth timing sequence to the driving electrode (31) under the fourth timing sequence;
the step of detecting the droplet (Dr) comprising:

    providing the third voltage ($V_3$) to the driving electrodes (31) under the fourth timing sequence and the fifth timing sequence for making the driving electrodes (31) be coupled with the detection electrode (32), and outputting the detection voltage ($V_{out}$) by the detection electrode (32);
    computing the recovery time of the detection voltage ($V_{out}$) changing from the peak voltage to the reference voltage in one cycle of the voltage period; and
    determining whether the droplet (Dr) moves from the driving electrode (31) under the fifth timing sequence to the driving electrode (31) under the fourth timing sequence based on the recovery time.

15. The method of claim 9, wherein the driving loop (3) further comprises a first dielectric layer (33) disposed on a side of the driving electrodes (31) adjacent to the detection electrode (32), and a second dielectric layer (34) disposed on a side of the detection electrode (32) adjacent to the driving electrodes (31).

16. The method of claim 9, wherein the detection chip (10) comprises a chip casing (1); the chip casing (1) comprises a first cover (11), a spacer layer (12), and a second cover (13); two opposite surfaces of the spacer layer (12) are respectively adjacent to the first cover (11) and the second cover (13); the first cover (11), the spacer layer (12), and the second cover (13) form the channel (2); the driving electrodes (31) arranged in a matrix are disposed on a surface of the first cover (11) adjacent to the channel (2); the detection electrode (32) is disposed on a surface of the second cover (13) adjacent to the channel (2).

FIG. 1

100

FIG. 2

FIG. 3

FIG. 4

FIG. 5

FIG. 6

First step

| Dr | | | | | |
|---|---|---|---|---|---|
| A | B | C | D | E | F |
| T2 | T1 | T2 | T2 | T2 | T2 |

Second step

| | Dr | | | | |
|---|---|---|---|---|---|
| A | B | C | D | E | F |
| T3 | T2 | T1 | T2 | T2 | T2 |

⋮

Sixth step

| | | | | | Dr |
|---|---|---|---|---|---|
| A | B | C | D | E | F |
| T2 | T2 | T2 | T2 | T3 | T2 |

FIG. 7

First step

| Dr | | | | | |
|----|---|---|---|---|---|

A    B    C    D    E    F

T2    T1    T2    T2    T1    T2

Second step

| | Dr | | | | |
|---|----|---|---|---|---|

A    B    C    D    E    F

T3    T2    T1    T3    T2    T1

Sixth step

| | | | | | Dr |
|---|---|---|---|---|----|

A    B    C    D    E    F

T2    T3    T2    T2    T3    T2

FIG. 8

FIG. 9

First step

| | | | | | |
|---|---|---|---|---|---|
| (Dr) | | | | | |
| A | B | C | D | E | F |
| T5 | T4 | T5 | T5 | T5 | T5 |

↓

Second step

| | | | | | |
|---|---|---|---|---|---|
| | (Dr) | | | | |
| A | B | C | D | E | F |
| T5 | T5 | T4 | T5 | T5 | T5 |

↓

⋮                    ⋮

Sixth step

| | | | | | |
|---|---|---|---|---|---|
| | | | | | (Dr) |
| A | B | C | D | E | F |
| T4 | T4 | T4 | T4 | T4 | T4 |

FIG. 10

A    B    C    D    E    F

T3   T3   T3   T3   T3   T3

FIG. 11

A    B    C    D    E    F

T3   T3   T3   T3   T3   T3

FIG. 12

A    B    C    D    E    F

T3   T3   T3   T3   T3   T3

FIG. 13

Europäisches
Patentamt

European
Patent Office

Office européen
des brevets

# EUROPEAN SEARCH REPORT

Application Number

EP 21 19 9933

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/175932 A1 (HADWEN BENJAMIN JAMES [GB] ET AL) 4 June 2020 (2020-06-04) | 1,5,6,8 | INV.<br>B01L3/00 |
| A | * paragraphs [0027], [0031] – [0033]; figure 8 * | 9-16 | B01L7/00<br>G01N33/49 |
| | ----- | | |
| X | WO 2018/039281 A1 (MIROCULUS INC [US]) 1 March 2018 (2018-03-01)<br>* paragraphs [0009], [0016], [0020], [0039] – [0040], [0055] – [0068]; figure 2A * | 1-16 | ADD.<br>G01N15/00 |
| | ----- | | |
| A | US 2006/132542 A1 (BRUYKER DIRK D [US] ET AL) 22 June 2006 (2006-06-22)<br>* paragraphs [0027], [0033] – [0036]; figures 2, 4A-B * | 1-16 | |
| | ----- | | |

|  |  |
|---|---|
| | TECHNICAL FIELDS SEARCHED (IPC) |
| | B01L<br>G01N |

The present search report has been drawn up for all claims

| Place of search | Date of completion of the search | Examiner |
|---|---|---|
| The Hague | 15 February 2022 | Ruiz-Echarri Rueda |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 9933

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2022

| Patent document cited in search report | | Publication date | Patent family member(s) | | Publication date |
|---|---|---|---|---|---|
| US 2020175932 | A1 | 04-06-2020 | CN 111250178 | A | 09-06-2020 |
| | | | EP 3662998 | A1 | 10-06-2020 |
| | | | US 2020175932 | A1 | 04-06-2020 |
| WO 2018039281 | A1 | 01-03-2018 | CA 3034064 | A1 | 01-03-2018 |
| | | | CN 109715781 | A | 03-05-2019 |
| | | | EP 3500660 | A1 | 26-06-2019 |
| | | | JP 2020501107 | A | 16-01-2020 |
| | | | US 2019217301 | A1 | 18-07-2019 |
| | | | US 2020254458 | A1 | 13-08-2020 |
| | | | WO 2018039281 | A1 | 01-03-2018 |
| US 2006132542 | A1 | 22-06-2006 | NONE | | |

EPO FORM P0459

For more details about this annex : see Official Journal of the European Patent Office, No. 12/82